# EUROPEAN PATENT APPLICATION

(11) **EP 3 954 219 A1**
(43) Date of publication of application: **16.02.2022**
(21) Application number: 21188573.6
(22) Date of filing: 29.07.2021
(51) Int. Cl.: A23G 1/21, A23G 1/00, A23G 1/26, A23G 3/34, A23G 3/02

(54) **DEVICE FOR ROTATING MOULDS TO MAKE HOLLOW FORMS**

(30) Priority: 14.08.2020 BE 202005571
(71) Applicant: HACOS, naamloze vennootschap, 2390 Malle (BE)
(72) Inventor: VAN MEULENBEKE, Pierre, 2970 (BE)
(74) Representative: Jacobs, Tinneke Ivonne C

(57) **Abstract**

Device (1) for rotating moulds (2) for making hollow forms, containing an automatic spinner (3) with one or more mounting locations (8) thereon for mounting one or more moulds (2) on the spinner (3), characterised in that the spinner (3) is provided with one or more disks (4) which are mounted on a rotatable, central shaft (5), whereby each disk (4) is provided with driving means (6) such that the speed, stop position and/or rotation time of each disk (4) are individually adjustable and whereby each disk (4) is provided with a number of rotatable shafts (7), whereby each shaft (7) is provided with a mounting location (8) for mounting one or more moulds (2).

## Description

The present invention relates to a device for rotating moulds for making hollow forms.

More specifically, the invention is intended for making hollow chocolate forms.

A device for rotating a mould for making hollow forms, whereby the device is provided with one rotating spinner on which different moulds are directly mounted from a conveyor belt is already known.

A disadvantage of this is that, for mounting and removing a mould from the spinner, the entire spinner must stop rotating.

The moulds on one and the same spinner rotate simultaneously and with the same speed, stop position and rotation time.

A disadvantage of this is that only one sort of hollow form from the same material with the same form can be made on a spinner.

The purpose of the present invention is to provide a solution to the aforementioned and other disadvantages.

To this end, the invention relates to a device for rotating moulds for making hollow forms, containing an automatic spinner with one or more mounting locations thereon for mounting one or more moulds on the spinner, whereby the spinner is provided with one or more disks which are mounted on a rotatable, central shaft, whereby each disk is provided with driving means such that the speed, stop position and/or rotation time of each disk are individually adjustable and whereby each disk is provided with a number of rotatable shafts, whereby each shaft is provided with a mounting location for one or more moulds and whereby the device is provided with a robot arm for mounting and/or removing the one or more moulds on the one or more mounting locations.

An advantage of this is that one automatic spinner can be used to produce different types of hollow forms and/or sizes of hollow forms and/or materials at the same time.

Another advantage is that one mounting location can be provided with several moulds such that the production of the hollow forms increases strongly.

The driving means of each disk contain a servo motor such that the speed and/or stop position and/or rotation time of each disk are separately adjustable.

This offers the advantage that for mounting and removing one or more moulds only one disk must be stationary, while the other disks can continue to rotate.

Another advantage is that one or more moulds can be mounted on the spinner with different forms such that one spinner can take care of several production lines.

Preferably such robot arm and servo motors of the disks are connected to a central controller for coordinating the rotations of the disks and shafts of the spinner and mounting and/or removing one or more moulds by the robot arm.

This offers the advantage that the robot arm always knows the position and rotation time of each mould on the spinner such that moulds with different forms and sizes can be mounted on the spinner at the same time.

In a preferred embodiment the moulds and mounting locations are provided with complementary magnets or a metal plate and associated magnet, such that a mould can be mounted with a magnet or metal plate on a mounting location with complementary magnet or metal plate.

Said embodiment allows a mould to be mounted on a mounting location simply, efficiently and cheaply.

In a practical embodiment the central shaft can be provided with a vibrating function such that the moulds vibrate while rotating, which stimulates the spread of the fluid through a cavity of the mould.

With the intention of better showing the characteristics of the invention, a preferred embodiment of a device and a method according to the invention is described by way of an example without any limiting nature, with reference to the accompanying drawings wherein:
figure 1 schematically shows a perspective view of a device according to the invention, in unused condition;
figure 2 shows a cross-section according to line II-II in figure 1;
figure 3 schematically shows a perspective view of a robot arm according to the invention, in unused condition;
figure 4 shows a perspective view of the device according to the invention, but in used condition;
figures 5 to 6 show consecutive steps for a method according to the invention.

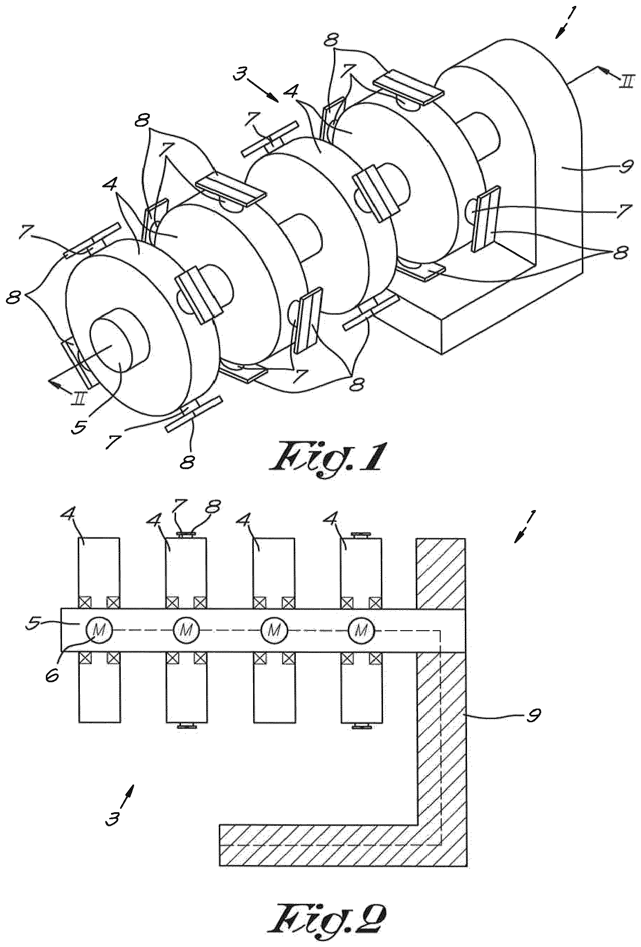

The device 1 shown in figure 1 is intended for rotating moulds 2 for making hollow forms, whereby the device 1 contains an automatic spinner 3 which is provided with one or more disks 4, in this case four disks, which are mounted around a rotatable, central shaft 5.

In the case of figure 2 each disk 4 is provided with driving means 6, preferably containing a servo motor, such that the speed, stop position and/or rotation time of each disk 4 are separately adjustable.

The rotation time and speed with which a particular mould 2 must rotate on the spinner 3 is predefined.

In addition, each disk 4 can be provided with a number of rotatable shafts 7, in the case of figure 1 four rotatable shafts 7, whereby each shaft 7 is provided with a mounting location 8 for one or more moulds 2.

However, it is also possible to provide a disk 4 with more or fewer shafts 7 depending on the preference and/or the need.

Preferably, the aforementioned rotatable shafts 7 of the disks 4 protrude outward radially from the disks 4 and are able to rotate independently of each other.

In figure 1 said mounting locations 8 are provided with magnets in which case the moulds 2 can be provided with a metal plate or complementary magnets, such that one mounting location 8 can be provided with one or more moulds 2.

However, it is also possible to provide the mounting locations 8 with a click system, such that the moulds can be clicked in.

The central shaft 5 of the device 1 is connected with a system 9 or a chassis or a wall or the like and is preferably equipped with a vibrating function such that the moulds 2 vibrate while rotating to thus stimulate the spread of the content in the moulds 2.

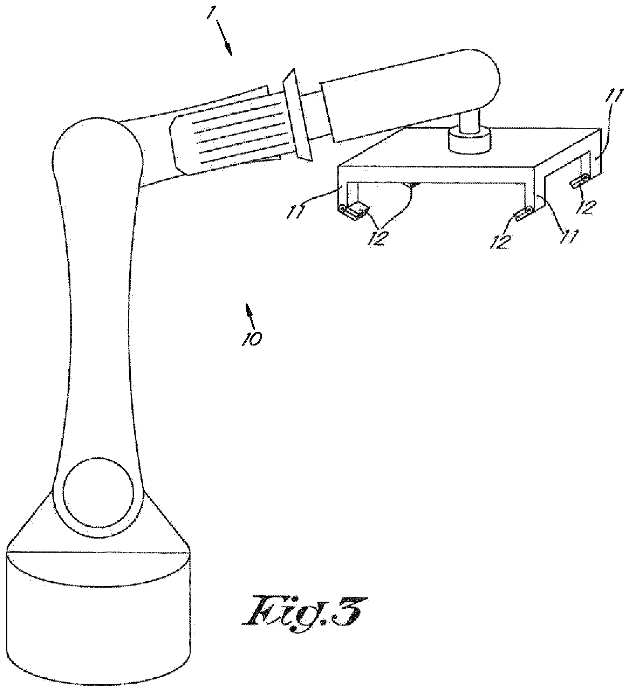

Preferably, the device 1 is provided with a robot arm 10, as shown in figures 3 to 5, for mounting and/or removing the moulds 2 on the mounting locations 8.

Preferably, the robot arm 10 is provided with one or more fingers 11, four fingers 11 in the case of figure 3, whereby at the free end of each finger 11 a clamp 12 is provided for moving a mould 2.

It is also possible that the fingers 11 of the robot arm 10 are provided with magnets or the like at their ends for moving a mould 2.

In this case the mould 2 to be moved can be equipped in its corners with metal plates or with magnets that are complementary to the magnets of the fingers 11 of the robot arm 10.

For demonstrating the invention, a simplified representation of the spinner with only one disk is shown hereinafter.

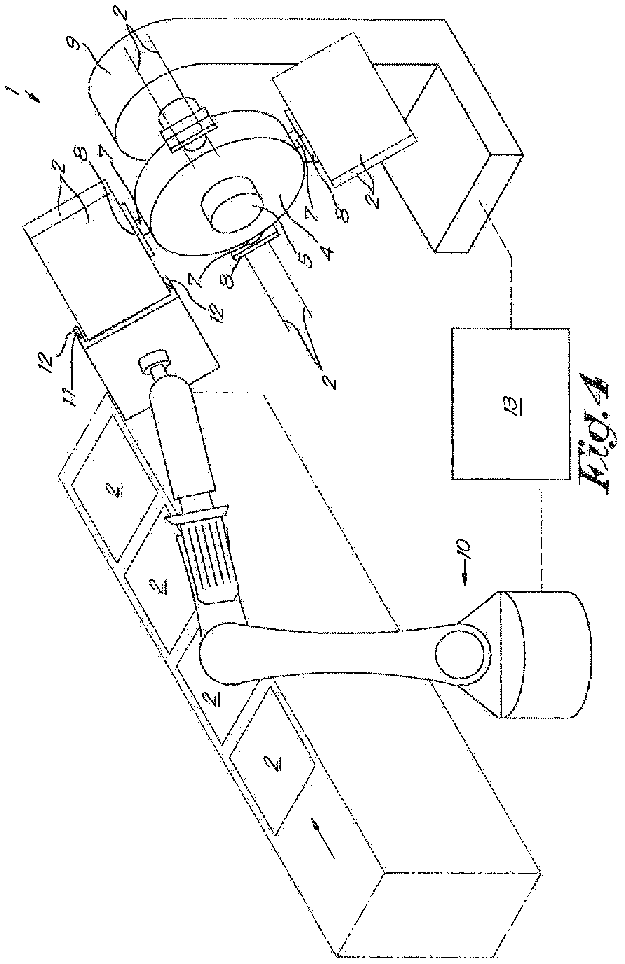

The robot arm 10 and the driving means 6 of the disks 4 are in connection with a central controller 13, as shown in figure 4, such that the robot arm 10 knows the position and rotation time of each mould 2 on the spinner 3 at all times.

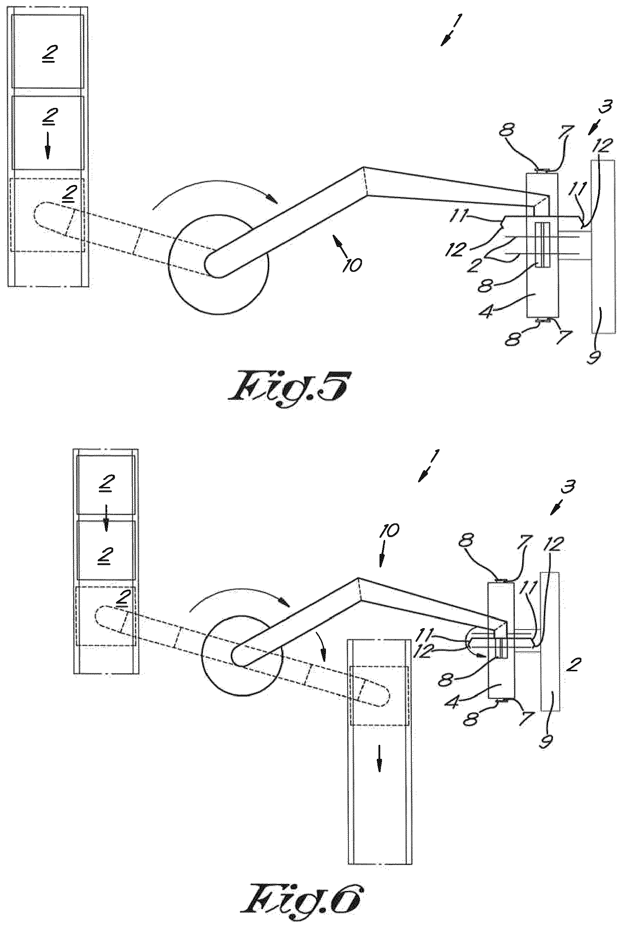

A method for letting moulds 2 rotate for making hollow forms, using the device 1 is hereinafter described according to the figures 5 and 6.

First an automatic spinner 3 is provided, which contains four disks 4 which are mounted around a rotatable, central shaft 5, whereby the disks 4 are provided with rotatable shafts 7 with a mounting location 8.

Providing, for example, a conveyor belt 14 for supplying moulds 2 with a desired liquid content for rotating them for making hollow forms.

Subsequently, one or more moulds 2 on one or more mounting locations 8 can be mounted on a disk 4, as shown in figure 5, after which the disks 4 can rotate while at the same time shafts 7 of the disks 4 can also rotate individually independently from each other.

Vibrating of the central shaft 5 to stimulate the spread of the content of the moulds 2.

A rotating disk 4 and its associated shafts 7 can be stopped after a predefined time such that a new mould 2 can be mounted on a mounting location 8 of a stationary disk 4 which may or may not be occupied.

After mounting a new mould 2 on a particular mounting location 8 of the stationary disk 4, as shown in figure 5, an already rotated mould 2 can be removed from the mounting location 8, as shown in figure 6.

In the case of figure 6, the removed mould 4 or moulds 4 is or are mounted on a conveyor belt 14 for further processing.

After mounting and/or removing one or more moulds 2, the stationary disk 4 will rotate again, whereby the associated shafts 7 will also individually rotate again.

The steps from the rotating stopping to mounting a mould 2 and the renewed rotating of the shafts 7 can be repeated with each next disk 4 and/or when mounting one or more new moulds 2.

The method may also contain an extra step for providing a robot arm 10 with one or more fingers 11, said fingers 11 preferably being provided at their free ends with a clamp 12, said method consisting in using the robot arm 10 for mounting and removing the moulds 2 from the mounting locations.

The robot arm 10 and the automatic spinner 3 are in connection with a central controller 13, which records the rotation time and/or rotation speed and/or position of each mould 2 on the spinner 3 and sends signals for stopping a disk 4 after a predefined time such that a particular mould 2 can be mounted on the stationary disk 4 and/or a mould 2 can be removed from the disk 4 by the robot arm 10.

The present invention is by no means limited to the embodiment described as an example and shown in the figures, however, such method and device can be realised according to different variants, without departing from the scope of the invention.

## Claims

1. Device (1) for rotating moulds (2) for making hollow forms, containing an automatic spinner (3) with one or more mounting locations (8) thereon for mounting one or more moulds (2) on the spinner (3), **characterised in that** the spinner (3) is provided with one or more disks (4) which are mounted on a rotatable, central shaft (5), whereby each disk (4) is provided with driving means (6) such that the speed, stop position and/or rotation time of each disk (4) are individually adjustable and whereby each disk (4) is provided with a number of rotatable shafts (7), whereby each shaft (7) is provided with a mounting location (8) for mounting one or more moulds (2) and whereby the device (1) is provided with a robot arm (10) for mounting and/or removing the one or more moulds (2) on the one or more mounting locations (8).

2. Device according to claim 1, **characterised in that** the mounting locations (8) are provided with magnets such that on one mounting location (8) one or more moulds (2) can be provided.

3. Device according to claim 1 or 2, **characterised in that** the central shaft (5) is equipped with a vibrating function such that the moulds vibrate while rotating.

4. Device according to any one of the previous claims, **characterised in that** the rotatable shafts (7) of the disks (4) protrude radially outward from the disks (4).

5. Device according to any one of the previous claims, **characterised in that** the driving means (6) of the disks (4) contain servo motors.

6. Device according to any one of the previous claims, **characterised in that** the robot arm (10) is provided with one or more fingers (11), whereby at the free end of each finger (11) a clamp (12) is provided.

7. Device according to any one of the previous claims, **characterised in that** the robot arm (10) and the driving means (6) of the disks (4) are in connection with a central controller (13).

8. Device according to any one of the previous claims, **characterised in that** the spinner (3) is provided with at least four disks (4).

9. Device according to any one of the previous claims, **characterised in that** a disk (4) is provided with at least five rotatable shafts (7) with a mounting location (8).

10. Method for letting moulds (2) rotate using the device (1) according to any one of the previous claims, **characterised in that** the method comprises the following steps:
A. providing an automatic spinner (3) containing one or more disks (4) which are mounted around a rotatable, central shaft (5), said disks (4) being provided with rotatable shafts (7) with mounting locations (8);
B. providing moulds (2) for rotating them for making hollow forms;
C. mounting one or more moulds (2) on one or more mounting locations (8) on a disk (4);
D. rotating the disks (4) and at the same time rotating the shafts (7) and the disks (4);
E. after a predefined time stopping one of the disks (4) and the associated shafts (7);
F. mounting a new mould on a mounting location of the stationary disk and removing one or more moulds from the stationary disk;
G. rotating the stationary disk (4) again and letting the associated shafts (7) rotate again;
H. repeating steps E to G with a next disk (4).

11. Method according to claim 10, **characterised in that** the method contains an extra step for providing a robot arm (10) with one or more fingers (11), said fingers (11) preferably being provided at their free ends with a clamp (12) and that the method consists in using the robot arm (10) for mounting and removing the moulds (12) from the mounting locations (8).
